# EUROPÄISCHE PATENTSCHRIFT

(11) **EP 2 080 742 B1**
(45) Veröffentlichungstag und Bekanntmachung des Hinweises auf die Patenterteilung: **05.11.2014**
(21) Anmeldenummer: 09000077.9
(22) Anmeldetag: 07.01.2009
(51) Int. Cl.: C04B 28/16, C04B 111/20, C04B 18/14

(54) **Sulfat-Hüttenzement**
Sulphate foundry cement
Ciment de fonderie au sulfate

(30) Priorität: 15.01.2008 DE 102008004547
(43) Veröffentlichungstag der Anmeldung: 22.07.2009
(73) Patentinhaber: HeidelbergCement AG, 69120 Heidelberg (DE)
(72) Erfinder: Unsin, Joachim, 69115 Heidelberg (DE); Wagner, Eckhard, 69120 Heidelberg (DE)
(74) Vertreter: Wagner, Jutta

(56) Entgegenhaltungen:
- EP-A1- 1 059 273
- EP-A2- 0 270 075
- DE-A1- 3 124 521
- US-A- 4 328 039
- DATABASE WPI Week 200561 Thomson Scientific, London, GB; AN 2005-594277 XP002630293, -& JP 2005 232312 A (MITSUBISHI RAYON CO LTD) 2. September 2005 (2005-09-02)

## Beschreibung

Die vorliegende Erfindung betrifft einen Sulfathüttenzement sowie Bindemittelgemische auf Basis dieses Zements.

Zement bzw. daraus hergestellte Betone, Mörtel und Putze und andere bauchemische Zusammensetzungen finden heute vielfältige Anwendungen. Der Bedarf, vor allem weltweit, steigt stetig. Unter Zement wird dabei ein feingemahlenes, hydraulisch erhärtendes Bindemittel verstanden, d.h. ein Gemisch nichtmetallisch-anorganischer Bestandteile, das nach Wasserzugabe eine Suspension bildet, den Zementleim, der auf Grund von Hydratationsreaktionen sowohl an der Luft als auch unter Wasser erstarrt und unter Bildung von dauerhaftem und raumbeständigem Zementstein erhärtet.

Zur Herstellung von Beton, Mörtel und Putz können neben den Hauptkomponenten Zuschlag, Sand, Zement und Wasser weitere Bestandteile wie Betonzusatzstoffe und Betonzusatzmittel verwendet werden. Unter den Betonzusatzstoffen sind dabei Gesteinsmehle, wie z.B. Kalksteinmehl, sowie Flugaschen oder Silikastaub zu verstehen. Unter den Betonzusatzmitteln sind z.B. Verflüssiger, Fließmittel, Beschleuniger, Verzögerer, Luftporenbildner, etc. zu verstehen.

Die wesentlichen Eigenschaften des Zements, wie zeitlicher Ablauf der Erstarrung und Erhärtung, die Festigkeitseigenschaften und die chemische Widerstandsfähigkeit sind abhängig von der Zusammensetzung der Rohstoffe, dem Mengenanteil zugemahlener oder zugesetzter Bestandteile und von der Mahlfeinheit. Nicht zuletzt hängen auch die Kosten des Baustoffs, welcher auf Basis des Zements hergestellt wird, von den entsprechenden Bestandteilen ab.

Der am weitesten verbreitete Zement ist Portlandzement, dessen Hauptbestandteil, der Portlandzementklinker, durch Brennen von mineralischen Rohstoffen wie Kalkstein, Ton, Kalkmergel, Tonmergel u.ä. hergestellt wird. Trotz sehr erfolgreicher Optimierung der Brennprozesse erfordert die Brenntemperatur von bis zu etwa 1.500° C einen erheblichen Energieeinsatz. Es wurde daher schon früh nach Alternativen zum vollständigen oder teilweisen Ersatz des Portlandzementklinkers gesucht. Darüber hinaus kann der vollständige oder teilweise Ersatz des Portlandzementklinkers durch geeignete Ersatzstoffe auch zu erheblichen Minderungen der CO₂-Emissionen führen.

Anfang des 20. Jahrhunderts wurde so das als Sulfathüttenzement bezeichnete Bindemittel entwickelt. Nach der ab 1937 in der damaligen DIN 4210 enthaltenen Normierung musste Sulfathüttenzement zumindest 75 % Hüttensand, mindestens 3 % Sulfat (berechnet als SO₃) und nicht mehr als 5 % Portlandzement oder alternative alkalische Anreger enthalten. Eine typische Zusammensetzung war 75 bis 85 % Hüttensand, 12 bis 18 % Calciumsulfat und 1 bis 5 % Portlandzement.

Als Hüttensand wird eine rasch abgekühlte Hochofenschlacke bezeichnet. Hochofenschlacken entstehen bei der Eisenerzeugung im Hochofenprozess bei 1.450° bis 1.550° C. Sie bilden sich aus den natürlichen Beimengungen der Erze (Gangart), den auf das Erz abgestimmten Zuschlägen und der Koksasche. Die chemische Zusammensetzung wird so eingestellt, dass eine leicht schmelzbare, dünnflüssige und weitgehend eisenfreie Hochofenschlacke resultiert. Eine langsame Abkühlung der Hochofenschlacke würde zu einem kristallinen Produkt (Stückschlacke) führen, welches keine hydraulischen Eigenschaften aufweist. Je rascher die Hochofenschlacke aus der Schmelze abgekühlt (granuliert) wird, um so besser sind ihre hydraulischen Eigenschaften. Nur diese nichtkristallinen, glasartigen Hochofenschlacken, welche hydraulisch erhärten können, werden als Hüttensand bezeichnet.

Durch Vermischen feingemahlenen Hüttensandes mit feingemahlenem Calciumsulfat und Portlandzement oder durch gemeinsames Vermahlen der Komponenten Hüttensand, Calciumsulfat und Portlandzementklinker, entsteht der Sulfathüttenzement als hydraulisch erhärtendes Bindemittel. Im Vergleich zu Portlandzement mit ca. 375 bis 525 J/g (nach 7 Tagen) entwickelt Sulfathüttenzement eine mit ca. 160 bis 220 J/g (nach 7 Tagen) erheblich geringere Hydratationswärme. Er eignet sich daher insbesondere zur Erstellung von Bauwerken mit hoher Masse wie z.B. Staudämmen. Ein weiterer Vorteil ist der hohe Sulfatwiderstand des Zementsteins und eine erhöhte Widerstandsfähigkeit gegen chemischen Angriff, wie z.B. schwache Säuren.

Ungeachtet dieser Vorteile hat der Sulfathüttenzement in den siebziger Jahren des 20. Jahrhunderts die Zulassung in Deutschland verloren und ist seither in den entsprechenden Normen nicht mehr enthalten. Eine der Ursachen ist, dass heute erhältliche Hüttensande den für die Herstellung von hochwertigen Sulfathüttenzementen erforderlichen Aluminiumoxidgehalt immer seltener aufweisen. Nach der alten DIN 4210 sollte der Aluminiumoxidgehalt des Hüttensandes mindestens 13 % besser noch mindestens 15 % betragen. Aufgrund des verminderten Aluminiumoxidgehaltes ergeben sich geringere Frühfestigkeiten und es tritt verstärkt das Problem des sogenannten Absandens auf. Zudem erfordert die im Vergleich zu Portlandzement trägere Entwicklung der Hydratationsvorgänge eine erheblich längere Nachbehandlung des Betons oder Mörtels, um Verluste von Anmachwasser durch Verdunsten zu vermeiden.

Trotz dieser Probleme bestehen nach wie vor Bestrebungen, den in großer Menge anfallenden Hüttensand auch in Form von Sulfathüttenzement, mit seinen besonderen Eigenschaften, wieder nutzbar zu machen. Über die Jahre sind verschiedene Vorschläge gemacht worden von denen einige im Folgenden kurz dargestellt werden sollen.

Die DE 1 016 181 beschreibt Sulfathüttenzemente bei denen ein Gemisch aus Hüttensanden verschiedener Tonerdegehalte verwendet wird, so dass im Endeffekt in der verwendeten Mischung der angestrebte Aluminiumoxidgehalt erreicht wird.

Aus EP 029 069 ist es bekannt, einem Sulfathüttenzement einerseits einen Abbindeaktivator wie Natriumhydroxid, Calciumhydroxid, Calciumoxid usw. und andererseits einen neutralen bzw. nahezu neutralen Abbindebeschleuniger wie Magnesiumhydroxid, Aluminiumhydroxid, Magnesiumoxid usw. zuzufügen. Hierdurch soll die Erstarrung und Erhärtung einerseits und die Festigkeit sowie Beständigkeit andererseits positiv beeinflusst werden.

Gemäss DE 31 24 521 soll bei einem Sulfathüttenzement aus 78 bis 85 % basischer Hochofenschlacke, 10 bis 18 % Calciumsulfat (berechnet als Anhydrit) und 1 bis 6 % Portlandzementklinker die Hochofenschlacke eine chemische Zusammensetzung von 30 bis 45 % CaO, 10 bis 20 % Al₂O₃, 3 bis 20 % MgO und 25 bis 45 % SiO₂ aufweisen, wobei die Schlackezusammensetzung auf CaO + Al₂O₃ + MgO + SiO₂ = 100 % umgerechnet ist und das Verhältnis von sechswertig zu vierwertig koordinierten Kationen im Bereich von 0,3 bis 0,5 liegt und zusätzlich die spezifische Oberfläche der Schlacke größer als 450 m²/kg nach Blaine ist oder der Siebrückstand der Schlacke auf einem Sieb mit einer Maschenweite von 15 µm unter 60 % liegt.

Die AT 408 983 und die EP 1 195 361 gehen von einem auf über 5.000 cm²/g nach Blaine vermahlenen Hüttensand aus, wobei die Glasigkeit des Hüttensandes über 93 % liegen soll, der Gehalt an SiO₂ 34 bis 40 %, der Gehalt an CaO 34 bis 37 % und der Gehalt an Al₂O₃ mehr als 9 % aber vorzugsweise unter 13 % beträgt und das Verhältnis (CaO + MgO) / (Al₂O₃ + SiO₂) im Bereich 0,88 bis 0,98 liegt. Es wird vorgeschlagen diese Werte durch Vermischen von verschiedenen Hüttensanden zu erreichen.

In EP 675 088 wird ein Fließestrich auf Basis eines Bindemittels bestehend aus Calciumsulfat, Hüttensand und reaktiven Aluminaten beschrieben, der entsprechend einem Fenster im Dreistoffdiagramm Calciumsulfat / Hüttensand / reaktive Aluminate auf der Calciumsulfat-Hüttensand-Achse 35 bis 70 Gew.-% Calciumsulfat (berechnet als CaSO₄), sowie in Richtung reaktiver Aluminate 0,5 bis 5 Gew.-% Calciumaluminat (berechnet als CA) enthalten soll. Aus den Beispielen ergibt sich, dass brauchbare Bindemittel zwischen 35 und 50 % Calciumsulfat und zwischen 46 und 63 % Hüttensand enthalten. Das Patent beschreibt damit einen Anhydrit-Fließestrich, dessen Hauptkomponente ein Calciumsulfat ist, welches in seiner Dosierung deutlich über dem Gehalt der Nebenkomponente CaSO₄ (ca. 5 bis 20 %) in Sulfathüttenzementen liegt.

Schließlich wird in DE 23 56 637 vorgeschlagen, zur Erhöhung der Frühfestigkeit von Baustoffmischungen auf Basis von Portlandzement oder Eisenportlandzement oder Hochofenzement ein Gemisch aus Tonerdeschmelzzement, Gips, Halbhydrat oder Anhydrit und einem Sulfonsäuregruppen enthaltenden Formaldehyd-Amino-1,3,5-triazin-Kondensationsprodukt zuzufügen. Bei dieser Bindemittelzusammensetzung handelt es sich nicht um Sulfathüttenzement.

Den neueren Vorschlägen ist gemeinsam, dass an den Hüttensand relativ spezielle Anforderungen gestellt werden, soweit es sich um reine Sulfathüttenzemente handeln soll. Demgegenüber wäre es jedoch wünschenswert, auch ohne aufwendige Bestimmungen verschiedenster Eigenschaften des Hüttensandes einen Sulfathüttenzement mit guter Frühfestigkeitsentwicklung erhalten zu können, ohne dass Unsicherheiten in Bezug auf die Erstarrung und Erhärtung sowie die Endfestigkeiten in Kauf genommen werden müssen.

Überraschend wurde nun gefunden, dass sich durch Zusatz von geringen Anteilen Tonerdezement zu einem üblichen Sulfathüttenzement ein solches Bindemittel erhalten lässt.

Demzufolge betrifft die vorliegende Erfindung einen Sulfathüttenzement enthaltend 60 bis 89 Gew.-% Hüttensand, 10 bis 20 Gew.-% Calciumsulfat-Anhydrit, 0,5 bis 10 Gew.-% Portlandzement und 0,5 bis 10 Gew.-% Tonerdezement. Es versteht sich, dass die Berechnung der Komponenten des Sulfathüttenzementes auf eine Gesamtheit von 100 Gew.-% bezogen ist.

Ein Beton oder Mörtel oder ein anderer unter Verwendung des Bindemittels hergestellter Baustoff weist vorteilhafterweise im sehr wichtigen Zeitbereich der ersten Stunden nach dem Anmachen (insbesondere bereits nach 6 bis 8 Stunden) und in den ersten Tagen eine erwünschte Druckfestigkeit auf. Hierdurch entfällt die Notwendigkeit der für den Sulfathüttenzement typischen verlängerten Nachbehandlung.

Insbesondere ist es erfindungsgemäß möglich, die Druckfestigkeitsentwicklung sowohl im Frühfestigkeitsbereich bis 2 Tage als auch im Spätfestigkeitsbereich bis 28 Tage durch die Menge der Zugabe an Tonerdezement gezielt zu steuern.

Erfindungsgemäß wird von einem an sich bekannten Sulfathüttenzement ausgegangen.

Für das erfindungsgemäße Bindemittel eignen sich alle handelsüblichen (gemahlenen) Hüttensande, welche in Glasgehalt und chemischer Zusammensetzung den in der DIN EN 197-1 beschriebenen Anforderungen genügen.

Es wird vorgeschlagen Calciumsulfat-Anhydrit in einer Menge von 10 bis 20 Gew.-%, vorzugsweise von 12 bis 17 Gew.-% und insbesondere von 14 bis 16 Gew.-% der Gesamtmenge einzusetzen. Üblicherweise soll dabei die Feinheit des verwendeten Calciumsulfates im Bereich von 4000 bis 5000 cm²/g (nach Blaine) liegen. Durch den Einsatz von Calciumsulfat-Anhydrit als Calciumsulfatträger in der erfindungsgemäßen Menge wird erreicht, dass nach der Erhärtung nur wenig bis gar kein Anhydrit vorhanden ist. Dadurch können Treiberscheinungen bei einem späteren Wasserzutriit vermieden werden, welche auf eine mit einer Volumenzunahme verbundene Umsetzung von Anhydrit zu Dihydrat zurüchgeführt werden.

Der erfindungsgemäß enthaltene Portlandzement dient in bekannter Weise dazu, den Hüttensand anzuregen und den pH-Wert zu erhöhen. Auch hier eignen sich im Prinzip alle bekannten Portlandzemente. Die üblicherweise in Portlandzement enthaltenen Nebenbestandteile, wie der Anteil an Calciumsulfat, bleiben bei der Berechnung des Gehalts der erfindungsgemäßen weiteren Komponenten Hüttensand, Calciumsulfat-Anhydrit und Tonerdezement außer Betracht.

Weiterhin ist es möglich, den Portlandzement ganz oder teilweise durch entsprechend zusammengesetzte Prozessmehle oder Stäube, welche bei der Zementherstellung z.B. in der Abgasreinigung anfallen oder an bestimmten Stellen aus dem System ausgeschleust werden, zu ersetzen. Auch Heißmehl aus der Rohmehlvorwärmung und Stäube aus der Gasreinigung des Klinkerkühlers sind hier geeignet.

Besonders bevorzugt werden erfindungsgemäß Bindemittel, deren tonerdezementfreie Grundmischung aus etwa 80 Gew.-% Hüttensand, etwa 15 Gew.-% Calciumsulfat-Anhydrit und etwa 5 Gew.-% Portlandzement zusammengesetzt ist.

Erfindungsgemäß wird dieser Grundmischung ein Tonerdezement zugefügt. Dadurch lässt sich die Druckfestigkeitsentwicklung im Bereich von einigen Stunden, z. B. 6 bis 8 oder 10 Stunden, nach einem Tag und nach 7 oder 28 Tagen der normgerechten Entwicklung anpassen. Dies gelingt auch dann, wenn der Hüttensand den nach dem Stand der Technik definierten Anforderungen nicht genügt, insbesondere in seinem Aluminiumoxidgehalt zu niedrig liegt. Gewünschtenfalls können Bindemittel bereitgestellt werden mit denen sich Baustoffe mit hoher Frühfestigkeit ergeben.

Als Tonerdezement können erfindungsgemäß alle handelsüblichen Qualitäten eingesetzt werden. Die handelsüblichen Tonerdezemente umfassen, bezogen auf den Aluminiumoxidgehalt, einen Bereich von 40 bis 80 Gew.-% und können entweder nach dem Schmelz- oder nach dem Sinterverfahren hergestellt sein. Erfindungsgemäß bevorzugt sind Tonerdezemente mit Aluminiumoxidgehalten von 40 bis 70 Gew.-%.

Ein typischer eisenreicher Tonerdezement weist folgende Zusammensetzung auf:
37 bis 42 % Al₂O₃, 2 bis 6 % SiO₂, 14 bis 19 % Fe₂O₃, 37 bis 40 % CaO und weniger als 1,5 % MgO, sowie weniger als 0,4 % SO₃.

Ein eisenarmer Tonerdezement enthält typischerweise:
50 bis 54 % Al₂O₃, 2 bis 6 % SiO₂, 1 bis 3 % Fe₂O₃, 37 bis 40 % CaO sowie weniger als 1,5 % MgO und weniger als 0,4 % SO₃.

Ein sogenannter eisenfreier Tonerdezement enthält typischerweise:
68 bis 72 % Al₂O₃, < 1 % SiO₂, < 0,5 % Fe₂O₃, 26 bis 31 % CaO.

Bei der Herstellung von Tonerdezement bilden sich je nach Verhältnis von Aluminiumoxid zu Calciumoxid folgende Mineralphasen:
- bei eisenreichem Tonerdezement: Monocalciumaluminat (CA), Brownmillerit (C₄AF), Belit (C₂S), Gehlenit (C₂AS), Mayenit (C₁₂A₇) und Perowskit (CT)
- bei eisenarmem Tonerdezement: CA, C₂AS, CT, C₁₂A₇
- bei eisenfreiem Tonerdezement: CA, CA₂, C₁₂A₇.

Da für die hydraulischen Eigenschaften der Tonerdezemente vor allem die Phase Monocalciumaluminat (CA) von Bedeutung ist, ist es bevorzugt, wenn erfindungsgemäß ein Tonerdezement mit einem besonders hohen Anteil der Phase CA verwendet wird.

100 Teile des erfindungsgemäßen Bindemittels aus Hüttensand, Calciumsulfat-Anhydrit, Portlandzement und Tonerdezement sollen 0,5 bis 10 Teile, vorzugsweise 2 bis 7 Teile und besonders bevorzugt 3 bis 6 Teile Tonerdezement enthalten.

Das erfindungsgemäße Bindemittel eignet sich für verschiedenste Anwendungen im Bereich von Baustoffen wie Beton, Mörtel, Putz usw.

Bei der Verwendung kann das erfindungsgemäße Bindemittel in an sich bekannter Weise mit Betonzusatzmitteln und/oder Betonzusatzstoffen und/oder Gesteinskörnungen und/oder Sand vermischt werden. Hierdurch lassen sich in an sich bekannter Weise die Eigenschaften des Baustoffes beeinflussen.

Unter Betonzusatzmitteln nach DIN EN 934 und solchen mit bauaufsichtlicher Zulassung sind zu nennen: Betonverflüssiger, Fließmittel, Luftporenbildner, Dichtungsmittel, Verzögerer, Erstarrungsbeschleuniger, Erhärtungsbeschleuniger, Stabilisierer etc. Wie an sich bekannt, können verschiedene Zusatzmittel nebeneinander vorhanden sein, auch Gemische von Zusatzmitteln gleicher Wirkung sind in manchen Fällen vorteilhaft.

Unter Betonzusatzstoffen sind feine anorganische und organische Stoffe, die im Beton verwendet werden, um Eigenschaften gezielt zu verbessern oder zu erreichen, zu verstehen. DIN EN 206-1/DIN 1045-2 unterscheidet zwei Arten von anorganischen Zusatzstoffen:
Typ I: nahezu inaktive Zusatzstoffe wie z.B. Gesteinsmehle nach DIN EN 12620 oder Pigmente nach DIN EN 12878 bzw. mit allgemeiner bauaufsichtlicher Zulassung
Typ II: puzzolanische oder latent hydraulische Zusatzstoffe wie z.B. Trass nach DIN 51043, Flugasche nach DIN EN 450-1 oder Silicastaub mit allgemeiner bauaufsichtlicher Zulassung.

Sowohl die Betonzusatzmittel als auch die Betonzusatzstoffe werden, wenn vorhanden, in den üblichen empfohlenen Mengen eingesetzt.

Zur Herstellung von Baustoffen wie Beton und Mörtel werden die Bindemittel außerdem üblicherweise mit Gesteinskörnungen vermischt. Die Auswahl und Menge der verwendeten Gesteinskörnungen unterliegt den üblichen Anforderungen an Gesteinskörnungen (z.B. DIN EN 12620, DIN EN 13139) sowie den üblichen Regeln bei der Herstellung von Beton (z.B. DIN EN 206-1/DIN 1045-2).

Die erfindungsgemäßen Sulfathüttenzemente werden in an sich bekannter Weise in Mahlfeinheit, Zusammensetzung usw. an die vorgesehenen Verwendungen angepasst. In der Regel weisen die Bindemittel eine Feinheit nach Blaine von 3000 bis 7000 cm²/g und im besonderen von 4000 bis 5000 cm²/g auf.

Die folgenden Beispiele sollen die Erfindung weiter veranschaulichen, ohne sie jedoch auf die konkret beschriebenen Ausführungsformen zu beschränken. Soweit nichts anderes angegeben ist, beziehen sich sämtliche Angaben von % und Teilen in der vorliegenden Anmeldung auf das Gesamtgewicht der Mischung.

### Beispiele:

Für die folgenden Beispiele wurden 3 unterschiedlich zusammengesetzte, feingemahlene Hüttensande, ein gemahlener Anhydrit, ein CEM I 52,5, ein handelsüblicher eisenreicher Tonerdezement mit 40% Al₂O₃ und ein handelsüblicher eisenarmer Tonerdezement mit 50% Al₂O₃ verwendet. Sofern in den jeweiligen Tabellen nicht anders angegeben, betrug die Mahlfeinheit der Komponenten nach Blaine 4500 ± 50 cm²/g. Die mittels Röntgenfluoreszenzanalyse ermittelten chemischen Analysen der Komponenten und einige branchenübliche Bewertungskriterien der 3 Hüttensande sind in Tabelle 1 zusammengestellt.

**Tabelle 1a: Hüttensande**

| **RFA Werte (glfr.) %** | **Hüttensand 1** | **Hüttensand 2** | **Hüttensand 3** |
|---|---|---|---|
| **SiO₂** | 31,90 | 35,20 | 35,80 |
| **Al₂O₃** | 16,00 | 10,78 | 11,10 |
| **TiO₂** | 0,98 | 0,49 | 0,54 |
| **Fe₂O₃** | 0,36 | 1,06 | 0,76 |
| **CaO** | 37,40 | 41,64 | 38,60 |
| **MgO** | 9,65 | 8,62 | 9,54 |
| **K₂O** | 0,51 | 0,37 | 0,35 |
| **SO₃** | n.b. | n.b. | n.b. |
| **Summe** | 96,80 | 98,16 | 96,69 |

| **Bewertungskriterium** | | | |
|---|---|---|---|
| **(CaO+Al₂O₃+MgO)/SiO₂ ¹⁾** | 1,98 | 1,73 | 1,65 |
| **CaO/SiO₂ ²⁾** | 1,17 | 1,18 | 1, 08 |
| **(CaO+MgO)/SiO₂ ³⁾** | 1,47 | 1,43 | 1,34 |

| | | | |
|---|---|---|---|
| ¹⁾ DIN 1164 (1942); Anforderung ≥1, ²⁾ Einfache Basizität (1885) Anforderung >1, ³⁾ DIN EN 197-1 (2004); Anforderung >1 | | | |

**Tabelle 1b: Tonerdezement, Calciumsulfat und Portlandzement**

| **RFA Werte (glfr.) %** | **Tonerdezement 40** | **Tonerdezement 50** | **Anhydrit** | **CEM I 52,5 R** |
|---|---|---|---|---|
| **SiO₂** | 4,01 | 5,55 | 2,10 | 20,20 |
| **Al₂O₃** | 40,16 | 51,13 | 0,44 | 5,28 |
| **TiO₂** | 1,80 | 2,20 | 0,03 | n.b. |
| **Fe₂O₃** | 14,98 | 1,80 | 0,29 | 3,04 |
| **CaO** | 39,25 | 38,27 | 40,1 | 62,2 |
| **MgO** | 0,40 | 0,50 | 1,42 | 2,69 |
| **K₂O** | 0,08 | 0,30 | 0,18 | 1,19 |
| **SO₃** | n.b. | n.b. | 54,7 | 3,53 |
| **Summe** | 100,68 | 99,75 | 99,23 | 98,13 |

### Beispiel 1

Unter Verwendung der Hüttensande 1, 2 und 3 wurden durch Mischen drei Sulfathüttenzemente nach dem Stand der Technik mit der Zusammensetzung: 80 % Hüttensand, 15 % Anhydrit und 5 % CEM I 52,5 hergestellt. Die Druckfestigkeitsentwicklung dieser Bindemittel wurde an Normenmörteln entsprechend DIN EN 196-3 nach 6 Stunden sowie 1, 2, 7 und 28 Tagen geprüft. Die Ergebnisse der Prüfungen sind in Tabelle 2 zusammengestellt.

**Tabelle 2**

| **Sulfathüttenzement mit** | **Druckfestigkeit in N/mm² nach:** | | | | |
|---|---|---|---|---|---|
| | **6 Stunden** | **1 Tag** | **2 Tage** | **7 Tage** | **28 Tage** |
| **Hüttensand 1** | nicht messbar | 7,7 | 16,5 | 38,1 | 52,5 |
| **Hüttensand 2** | nicht messbar | 4,0 | 7,1 | 9,6 | 13,1 |
| **Hüttensand 3** | nicht messbar | 1,6 | 8,0 | 13,6 | 18,7 |

Es ist zu erkennen, dass der unter Verwendung des Hüttensandes 1 hergestellte Sulfathüttenzement zu allen Terminen die höchsten Druckfestigkeiten aufweist. Dies deckt sich mit der Tatsache, dass der Hüttensand 1 mit 16% den höchsten Al₂O₃-Gehalt besitzt und auch die in Tabelle 1 aufgeführten, branchenüblichen Bewertungskriterien für Hüttensande am besten erfüllt. Ungeachtet seiner damit ausgewiesenen besonderen Qualität, führt die Verwendung des Hüttensandes 1 in der angegebenen Sulfathüttenzement Rezeptur ohne den erfindungsgemäßen Tonerdezementzusatz, ebenso wie bei den Hüttensanden 2 und 3, nicht zu messbaren Druckfestigkeiten nach 6 Stunden.

### Beispiel 2

Es wurden zwei nicht erfindungsgemäße Sulfathüttenzemente der Zusammensetzung: 80 % Hüttensand, 15 % Anhydrit und 5 % CEM I 52,5 hergestellt. Dabei wurde jeweils der Hüttensand 3 verwendet. In einem der beiden Sulfathüttenzemente wurde der Hüttensand 3 mit einer Mahlfeinheit von 3500 cm²/g nach Blaine verwendet, im anderen mit einer Mahlfeinheit von 4500 cm²/g nach Blaine. Wie in Beispiel 1 wurden entsprechend DIN EN 196-3 Normenmörtel hergestellt und die Druckfestigkeiten nach 6 Stunden, sowie nach 1, 2, 7 und 28 Tagen geprüft. Die ermittelten Werte sind in Tabelle 3 dargestellt:

**Tabelle 3**

| **Sulfathüttenzement mit** | **Druckfestigkeit in N/mm² nach:** | | | | |
|---|---|---|---|---|---|
| | **6 Stunden** | **1 Tag** | **2 Tagen** | **7 Tagen** | **28 Tagen** |
| **Hüttensand 3 (3500 cm²/g)** | nicht messbar | 0,9 | 6,1 | 12,5 | 16,8 |
| **Hüttensand 3 (4500 cm²/g)** | nicht messbar | 1,6 | 8,0 | 13,6 | 18,7 |

Der Hüttensand 3 mit der geringeren spezifischen Oberfläche führte im daraus hergestellten Sulfathüttenzement zu allen Prüfterminen zu niedrigeren Druckfestigkeiten. Dies entspricht der Erwartung. Auch bei diesen beiden Sulfathüttenzementen waren nach 6 Stunden noch keine Druckfestigkeiten messbar.

### Beispiel 3

Den beiden Sulfathüttenzementen mit unterschiedlicher Mahlfeinheit des Beispiels 2 wurden wie erfindungsgemäß vorgesehen jeweils 5% handelsüblicher eisenarmer Tonerdezement 50 zugemischt. Die Zusammensetzung beträgt demnach: 76 % Hüttensand, 14,25 % Anhydrit, 4,75 % CEM I 52,5 und 5 % Tonerdezement. Analog zu den Beispielen 1 und 2 wurde an Normenmörteln die Entwicklung der Druckfestigkeiten geprüft. Es ergaben sich die in Tabelle 4 dargestellten Werte.

**Tabelle 4**

| **Sulfathüttenzement mit** | **Druckfestigkeit in N/mm² nach:** | | | | |
|---|---|---|---|---|---|
| | **6 Stunden** | **1 Tag** | **2 Tagen** | **7 Tagen** | **28 Tagen** |
| **Hüttensand 3 (3500 cm²/g) + 5% TZ 50 (3600 cm²/g)** | 1,1 | 4,5 | 9,8 | 26,4 | 41,0 |
| **Hüttensand 3 (4500 cm²/g) + 5% TZ 50 (3600 cm²/g)** | 1,4 | 5,3 | 11,9 | 33,3 | 54,0 |

Es zeigt sich, dass im Gegensatz zu den Bindemitteln nach dem Stand der Technik in den Beispielen 1 und 2 der Zusatz von 5 % Tonerdezement 50 bei beiden Sulfathüttenzementmischungen zu einer messbaren Druckfestigkeit nach 6 Stunden führt. Die Mischung mit Hüttensand 3, Blainewert 3500 cm²/g, weist nach 6 Stunden eine Druckfestigkeit von 1,1 N/mm² auf, die Mischung mit Hüttensand 3, Blainewert 4500 cm²/g, eine Druckfestigkeit von 1,4 N/mm². Gegenüber den beiden Sulfathüttenzementen ohne Tonerdezementzusatz im Beispiel 2 werden die Druckfestigkeiten durch den Zusatz von 5 % Tonerdezement 50 zu allen Terminen deutlich angehoben. Die absolute Erhöhung der 1 d und 2 d Druckfestigkeiten ist sehr gleichmäßig und liegt zwischen 3,6 und 3,9 N/mm². Überraschenderweise tritt durch den Tonerdezementzusatz auch eine erhebliche Erhöhung der 7 d Druckfestigkeiten (um 13,9 bzw. 19,7 N/mm² ) und der 28 d Druckfestigkeiten (um 24,2 bzw. 35,3 N/mm² ) ein, so dass annähernd das Festigkeitsprofil des Sulfathüttenzementes auf Basis des hochwertigen Hüttensandes 1 aus dem Beispiel 1 erreicht wird.

### Beispiel 4

Unter Verwendung des auf 4500 cm²/g nach Blaine gemahlenen Hüttensandes 3 wurden folgende drei Sulfathüttenzement Mischungen hergestellt:
A: 80 % Hüttensand, 15 % Anhydrit und 5 % CEM I 52,5
B: 76 % Hüttensand, 14,25 % Anhydrit, 4,75 % CEM I 52,5 und 5 % Tonerdezement 40
C: 76 % Hüttensand, 14,25 % Anhydrit, 4,75 % CEM I 52,5 und 5 % Tonerdezement 50,
um den Einfluss der beiden verschiedenen Tonerdezement-Typen auf die Frühfestigkeiten zu untersuchen. Es wurde nur die Druckfestigkeitsentwicklung im frühen Bereich bis 2 Tage in Normenmörtel mit w/z = 0.50 entsprechend DIN EN 196-3 geprüft. Die Ergebnisse sind in Tabelle 5 aufgelistet.

**Tabelle 5**

| **Mischung** | **Druckfestigkeit in N/mm² nach:** | | |
|---|---|---|---|
| | **6 Stunden** | **1 Tag** | **2 Tagen** |
| **A** | - | 1,8 | 7,7 |
| **B** | 0,6 | 4,3 | 8,4 |
| **C** | 1,4 | 5,3 | 11,9 |

Es zeigt sich die Wirksamkeit beider Tonerdezementarten im Vergleich zur Sulfathüttenzement Probe ohne Tonerdezement im Hinblick auf die Erhöhung der Frühfestigkeiten einschließlich der 6 Stundenwerte. Der Tabelle 5 ist zu entnehmen, dass der Zusatz von 5% eisenarmem Tonerdezement 50 zu etwas höheren Frühfestigkeiten als der Zusatz von eisenreichem Tonerdezement 40 führt.

## Patentansprüche

1. Sulfathüttenzement, **dadurch gekennzeichnet dass** 60 bis 89 Gew.-% Hüttensand, 10 bis 20 Gew.-% Calciumsulfat-Anhydrit, 0,5 bis 10 Gew.-% Portlandzement und 0,5 bis 10 Gew.-% Tonerdezement enthalten sind und er eine Feinheit im Bereich von 3000 bis 7000 cm²/g nach Blaine aufweist.

2. Sulfathüttenzement nach Anspruch 1, **dadurch gekennzeichnet, dass** 2 bis 7 Gew.-%, vorzugsweise 3 bis 6 Gew.-% Tonerdezement enthalten sind.

3. Sulfathüttenzement nach Anspruch 1 oder 2, **dadurch gekennzeichnet, dass** 12 bis 17 Gew.-%, vorzugsweise 14 bis 16 Gew.-% Calciumsulfat-Anhydrit enthalten sind.

4. Sulfathüttenzement nach zumindest einem der Ansprüche 1 bis 3, **dadurch gekennzeichnet, dass** 3 bis 7 Gew.-%, vorzugsweise 4 bis 6 Gew.-% Portlandzement enthalten sind.

5. Sulfathüttenzement nach zumindest einem einem der Ansprüche 1 bis 4, **dadurch gekennzeichnet, dass** er eine Feinheit im Bereich von 4000 bis 5000 cm²/g nach Blaine aufweist.

6. Sulfathüttenzement nach zumindest einem der Ansprüche 1 bis 5, **dadurch gekennzeichnet, dass** der Tonerdezement einen Aluminiumoxidgehalt von 40 bis 70 Gew.-% aufweist.

7. Verwendung eines Sulfathüttenzementes nach zumindest einem der Ansprüche 1 bis 6 zur Herstellung von Beton, Mörtel, Putz und Betonfertigteilen.

8. Verwendung nach Anspruch 7, **dadurch gekennzeichnet, dass** ein oder mehrere Betonzusatzmittel, vorzugsweise ausgewählt unter Betonverflüssigern, Fließmitteln, Erstarrungsbeschleunigern, Erhärtungsbeschleunigern, Verzögerern, Luftporenbildnern, Dichtungsmitteln, Stabilisierern und Mischungen davon, zugefügt werden.

9. Verwendung nach Anspruch 7 oder 8, **dadurch gekennzeichnet, dass** ein oder mehrere Betonzusatzstoffe, vorzugsweise ausgewählt unter Gesteinsmehlen nach DIN EN 12620, Pigmenten nach DIN EN 12878, Trass nach DIN 51043, Flugasche nach DIN EN 450-1 Silicastaub und Mischungen davon, zugefügt werden.

10. Verwendung nach zumindest einem der Ansprüche 7 bis 9, **dadurch gekennzeichnet, dass** Gesteinskörnungen und/oder Sand zugefügt wird/werden.

11. Verwendung nach zumindest einem der Ansprüche 7 bis 10, **dadurch gekennzeichnet, dass** die Druckfestigkeit nach 6 Stunden, geprüft an Normenmörteln gemäß DIN EN 196-3 mindestens 1 N/mm² beträgt.

12. Verwendung nach zumindest einem der Ansprüche 7 bis 11, **dadurch gekennzeichnet, dass** der Baustoff ein Beton zur Erstellung von Bauwerken mit hoher Masse ist, wie z. B. Staudämmen, oder zur Erstellung von Bauteilen, insbesondere Betonfertigteilen, welche vorzugsweise einen hohen Sulfatwiderstand aufweisen.

## Claims

1. Supersulphated cement **characterised in that** it contains 60 - 89 % by weight of granulated blast furnace slag, 10 - 20 % by weight of calcium sulphate anhydrite, 0.5 - 10 % by weight of Portland cement and 0.5 - 10 % by weight of alumina cement and that it has a fineness in the range of 3000 to 7000 cm²/g according to Blaine.

2. Supersulphated cement according to claim 1, **characterised in that** it contains 2 - 7 % by weight, preferably 3 to 6 % by weight of alumina cement.

3. Supersulphated cement according to claim 1 or 2, **characterised in that** it contains 12 to 17 % by weight, preferably 14 to 16 % by weight of calcium sulphate anhydrite.

4. Supersulphated cement according to one of claims 1 to 3, **characterised in that** it contains 3 to 7 % by weight, preferably 4 to 6 % by weight of Portland cement.

5. Supersulphated cement according to at least one of claims 1 to 4, **characterised in that** it has a fineness in the range of 4000 - 5000 cm²/g according to Blaine.

6. Supersulphated cement according to at least one of claims 1 to 5, **characterised in that** the alumina cement has an aluminium oxide content of 40 to 70 % by weight.

7. Use of a supersulphated cement according to at least one of claims 1 to 6 for the manufacturing of concrete, mortar, plaster and pre-cast concrete elements.

8. Use according to claim 7, **characterised in that** one or several concrete admixtures, preferably selected from concrete plasticisers, water-reducing agents, setting accelerators, hardening accelerators, retarders, air pore formers, sealants, stabilisers and mixtures thereof are added.

9. Use according to claims 7 or 8, **characterised in that** one or several concrete additives, preferably selected from among powdered minerals according to DIN EN 12620, pigments according to DIN EN 12878, trass according to DIN 51043, fly ash according to DIN EN 450-1, silica dust and mixtures thereof are added.

10. Use according to claims 7 to 9, **characterised in that** aggregates and/or sand is/are added.

11. Use according to at least one of claims 7 to 10, **characterised in that** the compressive strength after 6 hours, tested on standard mortars according to DIN EN 196-3, amounts to at least 1 N/mm².

12. Use according to at least one of claims 7 to 11, **characterised in that** the construction material is a concrete for the construction of structures of high mass, like e.g. dams, or for the construction of structural parts, especially pre-cast concrete units, which preferably exhibit a high sulphate resistivity.

## Revendications

1. Ciment de laitier au sulfate, **caractérisé en ce qu'**il contient 60 à 89% en poids de laitier, 10 à 20% en poids d'anhydrite de sulfate de calcium, 0,5 à 10% en poids de ciment Portland et 0,5 à 10% en poids de ciment alumineux et **en ce qu'**il présente une finesse dans la plage de 3000 à 7000 cm²/g selon Blaine.

2. Ciment de laitier au sulfate selon la revendication 1, **caractérisé en ce qu'**il contient 2 à 7% en poids, de préférence 3 à 6% en poids de ciment alumineux.

3. Ciment de laitier au sulfate selon la revendication 1 ou 2, **caractérisé en ce qu'**il contient 12 à 17% en poids, de préférence 14 à 16% en poids d'anhydrite de sulfate de calcium.

4. Ciment de laitier au sulfate selon au moins l'une quelconque des revendications 1 à 3, **caractérisé en ce qu'**il contient 3 à 7% en poids, de préférence 4 à 6% en poids de ciment Portland.

5. Ciment de laitier au sulfate selon au moins l'une quelconque des revendications 1 à 4, **caractérisé en ce qu'**il présente une finesse dans la plage de 4000 à 5000 cm²/g selon Blaine.

6. Ciment de laitier au sulfate selon au moins l'une quelconque des revendications 1 à 5, **caractérisé en ce que** le ciment alumineux présente une teneur en oxyde d'aluminium de 40 à 70% en poids.

7. Utilisation d'un ciment de laitier au sulfate selon au moins l'une quelconque des revendications 1 à 6 pour la préparation de béton, de mortier, de crépi et d'éléments de construction préfabriqués en béton.

8. Utilisation selon la revendication 7, **caractérisée en ce qu'**on ajoute un ou plusieurs additifs pour béton, de préférence choisis parmi les liquéfiants pour béton, les fluidifiants, les accélérateurs de prise, les accélérateurs de durcissement, les retardateurs, les agents de formation de pores d'air, les matières d'étanchéité, les stabilisants et leurs mélanges.

9. Utilisation selon la revendication 7 ou 8, **caractérisée en ce qu'**on ajoute un ou plusieurs additifs pour béton, de préférence choisis parmi les farines de pierre selon la norme DIN EN 12620, les pigments selon la norme DIN EN 12878, les terres de Trass selon la norme DIN EN 51043, les cendres volantes selon la norme DIN EN 450-1, la poussière de silice et leurs mélanges.

10. Utilisation selon au moins l'une quelconque des revendications 7 à 9, **caractérisée en ce qu'**on ajoute des granulats et/ou du sable.

11. Utilisation selon au moins l'une quelconque des revendications 7 à 10, **caractérisée en ce que** la résistance à la compression après 6 heures, testée sur des mortiers normalisés selon la norme DIN EN 196-3, est d'au moins 1 N/mm².

12. Utilisation selon au moins l'une quelconque des revendications 7 à 11, **caractérisée en ce que** le matériau de construction est un béton destiné à la réalisation de constructions de masse élevée, telles que par exemple des barrages, ou à la réalisation d'éléments de construction, en particulier d'éléments de construction préfabriqués en béton, qui présentent de préférence une résistance élevée aux sulfates.
